# EUROPEAN PATENT APPLICATION

(11) **EP 4 699 855 A1**
(43) Date of publication of application: **25.02.2026**
(21) Application number: 24835142.1
(22) Date of filing: 16.05.2024
(51) Int. Cl.: B60L 58/27, H01M 10/617

(54) **THERMAL MANAGEMENT SYSTEM AND VEHICLE**

(30) Priority: 03.07.2023 CN 202310809721
(71) Applicant: Zhejiang Geely Holding Group Co., Ltd., Hangzhou, Zhejiang 310051 (CN); Zhejiang Liankong Technologies Co., Ltd., Ningbo, Zhejiang 315336 (CN)
(72) Inventor: SUN, Ligang, Ningbo, Zhejiang 315899 (CN); XIA, Songyong, Ningbo, Zhejiang 315899 (CN); WANG, Jian, Ningbo, Zhejiang 315899 (CN); LIAO, Xingdong, Ningbo, Zhejiang 315899 (CN); XING, Xiaodong, Ningbo, Zhejiang 315899 (CN)
(74) Representative: Michalski Hüttermann & Partner Patentanwälte mbB
(86) International application number: PCT/CN2024/093688
(87) International publication number: WO 2025/007657

(57) **Abstract**

A thermal management system (1) includes a compressor (101), a condenser (102), a chiller (103), and a battery assembly (105). The compressor (101), the condenser (102), and the chiller (103) are in communication with each other sequentially to form a first heat exchange circuit (11); the condenser (102) is in communication with the battery assembly (105) to form a second heat exchange circuit (12); and the condenser (102) is configured to perform heat exchange on a first heat exchange medium and a second heat exchange medium, allowing the second heat exchange medium to heat the battery assembly (105). The thermal management system further includes: a preheating control valve (109), disposed in the second heat exchange circuit (12); and a preheating branch (110), selectively connected to the battery assembly (105) based on the preheating control valve (109). In a case that a temperature difference among a plurality of cells in the battery assembly exceeds a temperature difference threshold, the battery assembly (105) is disconnected from the second heat exchange circuit (102) and is communicated with the preheating branch (110) through the preheating control valve (109), to form a battery preheating circuit (13) for preheating the plurality of cells. Further disclosed is a vehicle including the thermal management system. According to the thermal management system, temperatures of the plurality of cells in the battery assembly are uniform, the service life of the battery assembly is prolonged, the battery capacity and output power of the battery assembly are improved, and the risk of battery faults is reduced, thereby prolonging the service life of the whole vehicle, improving the performance and endurance mileage of the whole vehicle, and reducing the risk of faults of the whole vehicle, and thus reducing the maintenance costs.

## Description

### CROSS-REFERENCE TO RELATED APPLICATIONS

The present disclosure claims priority to Chinese Patent Application No. 202310809721.6, filed on July 03, 2023, which is incorporated herein by reference in its entirety.

### TECHNICAL FIELD

Embodiments of the present disclosure relate to, but are not limited to, the field of thermal management technologies, and in particular to, but are not limited to, a thermal management system and a vehicle.

### BACKGROUND

With the rapid development of the vehicle industry and people's demand for low energy consumption, high efficiency, and environmental protection, a heat exchange technology for the vehicle is also undergoing constant innovation and development. A thermal management system is of crucial importance in order to enable efficient and reliable operation of vehicles.

### SUMMARY

The following is a brief summary of subject matter described in detail herein. This summary is not intended to be limiting as to the scope of the claims.

The present disclosure provides a thermal management system, including a compressor, a condenser, a chiller, and a battery assembly. The compressor, the condenser, and the chiller are in communication with each other sequentially to form a first heat exchange circuit, and the first heat exchange circuit is filled with a first heat exchange medium; the condenser is in communication with the battery assembly to form a second heat exchange circuit, and the second heat exchange circuit is filled with a second heat exchange medium; and the condenser is configured to perform heat exchange on the first heat exchange medium and the second heat exchange medium, allowing the second heat exchange medium to heat the battery assembly. The first heat exchange medium is a refrigerant, and the second heat exchange medium is a coolant. The thermal management system further includes: a preheating control valve disposed in the second heat exchange circuit; and a preheating branch selectively connected to the battery assembly based on the preheating control valve. In a case that a temperature difference among a plurality of cells included in the battery assembly exceeds a temperature difference threshold, the battery assembly is disconnected from the second heat exchange circuit and is communicated with the preheating branch through the preheating control valve, to form a battery preheating circuit for preheating the plurality of cells.

In some embodiments, the thermal management system further includes a heater core and a controller. The heater core is disposed in a passenger compartment of a vehicle; the controller is connected to the preheating control valve; the preheating control valve includes a first control terminal connected to the condenser, a second control terminal connected to the heater core, and a third control terminal connected to the battery assembly.

In some embodiments, in the case that the temperature difference among the plurality of cells exceeds the temperature difference threshold, the controller is configured to control the third control terminal of the preheating control valve to be closed, and control the preheating branch to be communicated with the plurality of cells, to form the battery preheating circuit.

In some embodiments, the controller is configured to control the second control terminal of the preheating control valve to be closed to control the heater core to stop heating.

In some embodiments, the preheating branch includes a preheating pipeline and a preheating switch valve disposed in the preheating pipeline, and the preheating switch valve is connected to the controller. In the case that the temperature difference between the plurality of cells exceeds the temperature difference threshold, the controller is configured to control the third control terminal of the preheating control valve to be closed, and control the preheating switch valve of the preheating branch to be opened, allowing the plurality of cells to be communicated with the preheating branch to form the battery preheating circuit.

In some embodiments, the preheating control valve includes a three-way valve.

In some embodiments, the preheating switch valve includes a one-way valve.

In some embodiments, the thermal management system further includes a first battery temperature sensor, a second battery temperature sensor, and a controller. The controller is connected to the first battery temperature sensor and the second battery temperature sensor, and the first battery temperature sensor and the second battery temperature sensor are located upstream and downstream of the plurality of cells respectively. The first battery temperature sensor is configured to detect a temperature of the second heat exchange medium entering the battery assembly and output a first battery signal; the second battery temperature sensor is configured to detect a temperature of the second heat exchange medium flowing out of the battery assembly and output a second battery signal; and the controller is configured to determine a temperature difference among the plurality of cells based on the first battery signal and the second battery signal, and in the case that the temperature difference among the plurality of cells exceeds the temperature difference threshold, the controller is configured to control the third control terminal of the preheating control valve to be closed, and control the preheating branch to be communicated with the plurality of cells to form the battery preheating circuit.

In some embodiments, the thermal management system further includes a heating assembly disposed in the second heat exchange circuit, and the heating assembly is configured to heat the second heat exchange medium in the second heat exchange circuit.

In some embodiments, the thermal management system further includes a first power assembly disposed in the second heat exchange circuit and located upstream of the condenser.

In some embodiments, the thermal management system further includes a second power assembly disposed in the second heat exchange circuit and located upstream of the battery assembly.

In some embodiments, the thermal management system further includes a motor assembly, and the chiller is in communication with the motor assembly to form a third heat exchange circuit.

In some embodiments, the third heat exchange circuit is filled with a third heat exchange medium, and the chiller is configured to perform heat exchange on the first heat exchange medium and the third heat exchange medium, allowing the third heat exchange medium to cool the motor assembly. The third heat exchange medium is a coolant.

In some embodiments, the thermal management system further includes a third power assembly disposed in the third heat exchange circuit.

In some embodiments, the thermal management system further includes a bypass branch connected between an inlet and an outlet of the compressor.

In some embodiments, the bypass branch includes a bypass pipeline and a bypass switch valve disposed in the bypass pipeline. The bypass pipeline is connected between the inlet and the outlet of the compressor, and the bypass switch valve is configured to control an on-off state of the bypass pipeline to control an on-off state between the inlet and the outlet of the compressor.

In some embodiments, the thermal management system further includes an inlet pressure sensor disposed at a compressor inlet of the compressor, and configured to detect a gas pressure at the compressor inlet and output an inlet pressure electrical signal; and an outlet pressure sensor disposed at a compressor outlet of the compressor, and configured to detect a gas pressure at the compressor outlet and output an outlet pressure electrical signal.

In some embodiments, in a case that a pressure difference between the compressor inlet and the compressor outlet is determined to be large based on the inlet pressure electrical signal and the outlet pressure electrical signal, an opening degree of the bypass switch valve is increased; and in a case that the pressure difference between the compressor inlet and the compressor outlet is determined to be small based on the inlet pressure electrical signal and the outlet pressure electrical signal, the opening degree of the bypass switch valve is decreased.

In some embodiments, the thermal management system further includes an external temperature sensor configured to detect an external temperature and output an external temperature electrical signal. In a case that the external temperature electrical signal indicates that the external temperature is lower than a low-temperature threshold, the bypass switch valve is opened, allowing the bypass pipeline to communicate the inlet and the outlet of the compressor.

The present application further provides a vehicle, including the thermal management system according to any one of the foregoing embodiments.

With a thermal management system and a vehicle provided in the embodiments of the present application, the thermal management system is provided with the preheating control valve and the preheating branch, the preheating control valve is disposed in the second heat exchange circuit, the preheating branch is selectively connected to the battery assembly based on the preheating control valve, and in the case that the temperature difference among the plurality of cells of the battery assembly exceeds the temperature difference threshold, the battery assembly is disconnected from the second heat exchange circuit and is communicated with the preheating branch through the preheating control valve, to form the battery preheating circuit to preheat the plurality of cells. In this way, the temperatures of the plurality of cells of the battery assembly are uniform, the service life of the battery assembly is prolonged, the battery capacity and output power of the battery assembly are improved, the risk of battery faults is reduced, the service life of the whole vehicle is prolonged, the performance and endurance mileage of the whole vehicle are improved, the risk of vehicle faults is reduced, and the maintenance cost is reduced.

It is to be understood that both the foregoing general description and the following detailed description are illustrative and explanatory only and are not restrictive of the disclosure. Other aspects will be appreciated upon reading and understanding the accompanying drawings and detailed description.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a schematic block diagram of a state of a thermal management system according to the present disclosure.
FIG. 2 is a schematic block diagram of another state of the thermal management system shown in FIG. 1.
FIG. 3 is a control block diagram of the thermal management system shown in FIG. 1.

### Description of reference signs

1-Thermal management system; 2-passenger compartment; 11-first heat exchange circuit; 12-second heat exchange circuit; 13-battery preheating circuit; 14-third heat exchange circuit; 101-compressor; 1011-compressor inlet; 1012-compressor outlet; 102-condenser; 103-chiller; 105-battery assembly; 106-heating assembly; 107-heater core; 108-motor assembly; 109-preheating control valve; 1091-first control terminal; 1092-second control terminal; 1093-third control terminal; 110-preheating branch; 111-first battery temperature sensor; 112-second battery temperature sensor; 113-preheating pipeline; 114-preheating switch valve; 115-first power assembly; 116-second power assembly; 117-third power assembly; 118-bypass branch; 119-bypass pipeline; 120-bypass switch valve; 113-controller; 1231-first control port; 1232-second control port; 1233-third control port; 124-external temperature sensor.

### DETAILED DESCRIPTION

Illustrative embodiments will be described in detail below, and examples of the embodiments are illustrated in the accompanying drawings. When the following description refers to the accompanying drawings, unless otherwise indicated, the same reference numerals in different drawings represent the same or similar elements. The implementations described in the following illustrative embodiments do not represent all implementations consistent with the present disclosure. Rather, they are merely examples of apparatuses and methods consistent with some aspects of the present disclosure as detailed in the appended claims.

The terms used in the present disclosure are merely for the purpose of describing specific embodiments, and are not intended to limit the present disclosure. Technical terms or scientific terms used in the present disclosure should have general meanings as understood by one of ordinary skill in the art to which the present disclosure belongs, unless otherwise defined. Terms, such as "first", "second", and the like, and similar words used in the specification and claims of the present disclosure do not indicate any order, quantity, or importance, but are merely used to distinguish between different components. Similarly, similar terms, such as "one", "a/an", or the like, do not represent a quantity limitation, but represent that there is at least one. Term, such as "a plurality of/multiple", "several", or the like, means two or more. Unless otherwise indicated, terms such as "front", "rear", "lower", "upper", and/or the like, are merely for ease of description, and are not limited to one position or one spatial orientation. Similar terms such as "comprise", "include", or the like, mean that an element or item appearing before "comprise" or "include" covers elements or items and equivalents thereof listed after "comprise" or "include", without excluding other elements or items. Similar terms "connect", "connect with each other", or the like, are not limited to physical or mechanical connections, and may include electrical connections, whether direct or indirect.

The terms used in the present disclosure are for the purpose of describing specific embodiments only, and are not intended to limit the present disclosure. As used in this specification and the appended claims, the singular forms "a/an", "said", and "the" are also intended to include plural forms unless clearly indicated otherwise in the context. It should also be understood that the term "and/or" as used herein refers to and includes any or all possible combinations of one or more associated listed items.

In a thermal management system of a vehicle, a battery assembly of the vehicle includes a plurality of cells. Due to differences in heat transfer and heat dissipation effects between the plurality of cells, temperatures of some of the plurality of cells are prone to be excessively high, while temperatures of other cells are relatively low, thereby affecting performance and a service life of the entire battery assembly, and affecting an endurance mileage of the entire vehicle.

The present disclosure provides a thermal management system, which includes a compressor, a condenser, a chiller, and a battery assembly. The compressor, the condenser, and the chiller are in communication with each other sequentially to form a first heat exchange circuit, and the first heat exchange circuit is filled with a first heat exchange medium. The condenser is in communication with the battery assembly to form a second heat exchange circuit, and the second heat exchange circuit is filled with a second heat exchange medium. The condenser is configured to perform heat exchange on the first heat exchange medium and the second heat exchange medium, so that the battery assembly is heated by the second heat exchange medium. The first heat exchange medium is a refrigerant, and the second heat exchange medium is a coolant. The thermal management system further includes a preheating control valve disposed in the second heat exchange circuit, and a preheating branch that is selectively connected to the battery assembly according to the preheating control valve. When a temperature difference among the plurality of cells of the battery assembly exceeds a temperature difference threshold, the battery assembly is disconnected from the second heat exchange circuit and is communicated with the preheating branch through the preheating control valve, to form a battery preheating circuit for preheating the plurality of cells.

The preheating control valve and the preheating branch are disposed in the thermal management system according to embodiments of the present disclosure, the preheating control valve is disposed in the second heat exchange circuit, and the preheating branch is selectively connected to the battery assembly based on the preheating control valve. When the temperature difference among the plurality of cells of the battery assembly exceeds the temperature difference threshold, the preheating control valve is controlled to disconnect the battery assembly from the second heat exchange circuit, and connect the battery assembly to the preheating branch to form the battery preheating circuit to preheat the plurality of cells. In this way, the temperatures of the plurality of cells of the battery assembly are uniform, the service life of the battery assembly is prolonged, the battery capacity and output power of the battery assembly are improved, the risk of battery faults is lowered, the service life of the entire vehicle is prolonged, the performance and endurance mileage of the entire vehicle are improved, and the risk of vehicle faults is lowered, thereby reducing the maintenance cost.

The vehicle includes a thermal management system, and may include a plurality of working modes, where the working mode may include one or more of an air conditioner heating mode, a battery heating mode, a battery preheating mode, an air conditioner cooling mode, a battery cooling mode, a motor cooling mode, or a dehumidification mode. The thermal management system is configured to control the operation of one or more working modes.

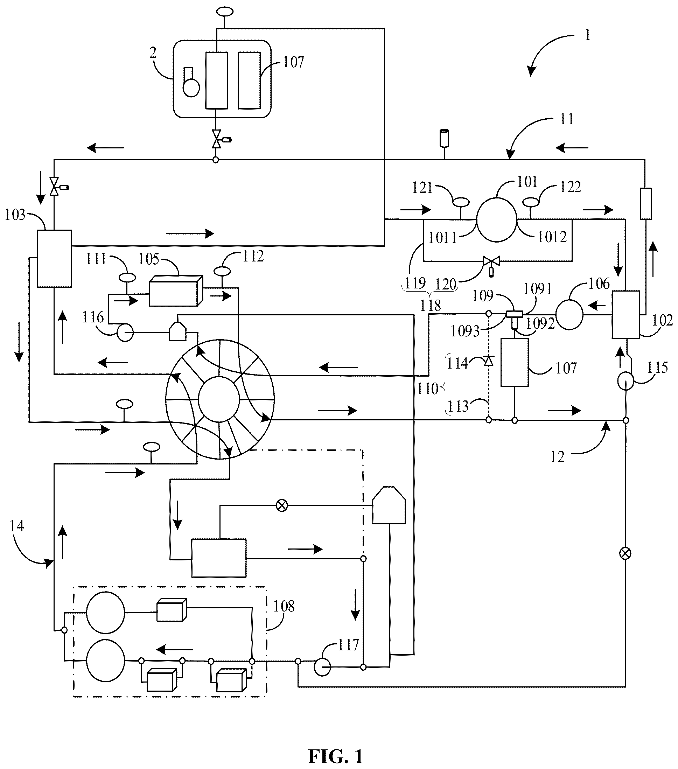

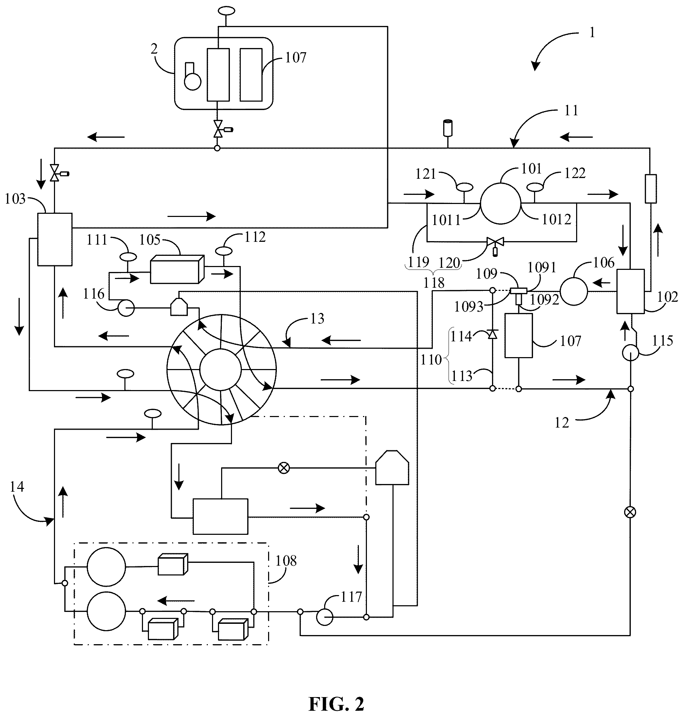

FIG. 1 is a schematic block diagram of a state of a thermal management system 1 according to the present disclosure. FIG. 2 is a schematic block diagram of another state of the thermal management system 1 shown in FIG. 1. As shown in FIG. 1, the thermal management system 1 includes a compressor 101, a condenser 102, a chiller 103, a battery assembly 105, a heating assembly 106, a heater core 107, and a motor assembly 108. In the embodiment shown in FIG. 1, the thermal management system 1 is configured to implement an air conditioner heating mode, a battery preheating mode, a battery heating mode, and a motor cooling mode.

In the embodiments shown in FIG. 1 and FIG. 2, the compressor 101, the condenser 102, and the chiller 103 are in communication with each other sequentially to form a first heat exchange circuit 11, the first heat exchange circuit 11 is filled with a first heat exchange medium, and the first heat exchange medium is a refrigerant. The condenser 102 and the battery assembly 105 are in communication with each other to form a second heat exchange circuit 12, the second heat exchange circuit 12 is filled with a second heat exchange medium, and the second heat exchange medium is a coolant. The condenser 102 is configured to perform heat exchange on the first heat exchange medium and the second heat exchange medium, and the second heat exchange medium is heated by the heating assembly 106, so that the second heat exchange medium heats the battery assembly 105.

In this embodiment, the condenser 102 may be a water-cooled condenser. The compressor 101 discharges a high-temperature and high-pressure gas after compressing the first heat exchange medium (refrigerant), the high-temperature and high-pressure gas undergoes condensation and heat dissipation in the condenser 102, and a high-temperature and high-pressure refrigerant liquid is output. In this case, a part of heat of the first heat exchange medium (the refrigerant) is taken away by the second heat exchange medium (the coolant), so that a temperature of the second heat exchange medium (the coolant) increases, and the second heat exchange medium (the coolant) circulates in the second heat exchange circuit 12 to heat the battery assembly 105, thereby implementing a battery heating function.

In the embodiments shown in FIGS. 1 and 2, the thermal management system 1 further includes a preheating control valve 109 and a preheating branch 110. The preheating control valve 109 is disposed in the second heat exchange circuit 12, and the preheating control valve 109 can be configured to control the on-off state of the second heat exchange circuit 12. The preheating branch 110 is selectively connected to the battery assembly 105 according to the preheating control valve.

In this embodiment, the battery assembly 105 includes a plurality of cells (not shown). Temperature unevenness may occur among the plurality of cells. When the temperature difference between the plurality of cells exceeds the temperature difference threshold, the preheating control valve 109 is controlled to disconnect the battery assembly 105 from the second heat exchange circuit 12, and the preheating branch 110 is controlled to connect the battery assembly 105 to the preheating branch 110 to form the battery preheating circuit 13 (as shown in FIG. 2). The plurality of cells are preheated through the battery preheating circuit 13, thereby realizing the battery preheating function. In this embodiment, the temperature difference between the plurality of cells cannot exceed 8°~10°. The temperature difference threshold may be 8°, 9°, or 10°, which is not limited in the present disclosure.

The thermal management system 1 is provided with the preheating control valve 109 and the preheating branch 110, the preheating control valve 109 is provided in the second heat exchange circuit 12, and the preheating branch 110 is selectively connected to the battery assembly 105 according to the preheating control valve. When the temperature difference between the plurality of cells of the battery assembly 105 exceeds the temperature difference threshold, the preheating control valve 109 is controlled to disconnect the battery assembly 105 from the second heat exchange circuit 12, the preheating branch 110 is controlled to be communicated with the battery assembly 105 to form the battery preheating circuit 13, and the plurality of cells are preheated through the battery preheating circuit 13. In this way, the temperatures in the plurality of cells of the battery assembly 105 can be uniform, the service life of the battery assembly 105 can be prolonged, the battery capacity and output power of the battery assembly 105 can be improved, the risk of battery faults can be lowered, the service life of the entire vehicle is prolonged, the performance and endurance mileage of the entire vehicle are improved, and the risk of vehicle faults is lowered, thereby reducing the maintenance cost.

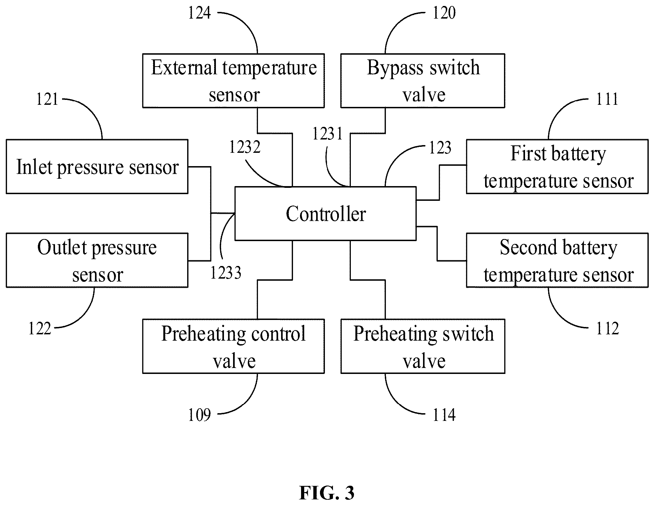

FIG. 3 is a schematic control block diagram of the thermal management system shown in FIG. 1. As shown in FIGS. 1 to 3, the preheating control valve 109 may be an electronic preheating control valve. The thermal management system 1 further includes a controller 123 connected to the preheating control valve 109.

In the embodiments shown in FIGS. 1 and 2, the thermal management system 1 further includes a first battery temperature sensor 111 and a second battery temperature sensor 112, the controller 123 (shown in FIG. 3) is connected to the first battery temperature sensor 111 and the second battery temperature sensor 112, and the first battery temperature sensor 111 and the second battery temperature sensor 112 are located upstream and downstream of the battery assembly 105, respectively. The first battery temperature sensor 111 is configured to detect a temperature of the second heat exchange medium (coolant) entering the battery assembly 105 and output a first battery signal. The second battery temperature sensor 112 is configured to detect a temperature of the second heat exchange medium (coolant) flowing out of the battery assembly 105 and output a second battery signal.

The controller 123 is configured to determine a temperature difference between the plurality of cells based on the first battery signal and the second battery signal. When the temperature difference between the plurality of cells exceeds the temperature difference threshold, the controller 123 is configured to control the preheating control valve 109 and the preheating branch 110, that is, control a third control terminal 1093 of the preheating control valve 109 to be closed, and control the preheating branch 110 to be communicated with the plurality of cells to form the battery preheating circuit 13. In this process, the controller 123 determines, according to the first battery signal and the second battery signal, the temperature difference between the cells located at the head and tail ends among the plurality of cells. When the temperature difference between the cells located at the head and tail ends among the plurality of cells exceeds 8°, 9° or 10°, the controller 123 controls the preheating control valve 109 to disconnect the battery assembly 105 from the second heat exchange circuit 12, and controls the preheating branch 110 to be communicated with the battery assembly 105 to form the battery preheating circuit 13. The plurality of cells are preheated through the battery preheating circuit 13, which uniformizes the temperatures among the plurality of cells of the battery assembly 105, thereby prolonging the service life of the battery assembly 105, improving the battery capacity and output power of the battery assembly 105, and reducing the risk of battery faults.

In the embodiments shown in FIGS. 1 and 2, the heater core 107 may be disposed in the second heat exchange circuit 12 and located in the passenger compartment 2 of the vehicle. The heater core 107 is disposed in the second heat exchange circuit 12, the heater core 107 can be heated by using the second heat exchange medium (coolant) with an increased temperature. In addition, the heater core 107 is disposed in the passenger compartment 2 of the vehicle, and when heating is required in the passenger compartment, the heater core 107 can be used to heat the passenger compartment 2, so as to realize the air conditioner heating function.

In the embodiments shown in FIG. 1 to FIG. 3, the preheating control valve 109 includes a first control terminal 1091, a second control terminal 1092, and a third control terminal 1093. The first control terminal 1091 is connected to the condenser 102, the second control terminal 1092 is connected to the heater core 107, and the third control terminal 1093 is connected to the battery assembly 105. In some embodiments, when the temperature difference between the plurality of cells exceeds the temperature difference threshold, the controller 123 controls the third control terminal 1093 to be closed, and controls the preheating branch 110 to be communicated with the plurality of cells of the battery assembly 105 to form the battery preheating circuit 13. In some embodiments, the controller 123 may also control the second control terminal 1092 to be closed, and control the heater core 107 to stop heating.

In the embodiments shown in FIG. 1 to FIG. 3, the preheating branch 110 includes a preheating pipeline 113 and a preheating switch valve 114 disposed in the preheating pipeline 113, and the preheating switch valve 114 may be an electronic switch valve connected to the controller 123. When the temperature difference between the plurality of cells exceeds the temperature difference threshold, the controller 123 controls the third control terminal 1093 to be closed, and controls the preheating switch valve 114 to be opened, so that the plurality of cells of the battery assembly 105 are communicated with the preheating branch 110 to form the battery preheating circuit 13 (as shown in FIG. 2). Through the cooperation of the preheating control valve 109 and the preheating switch valve 114, the plurality of cells of the battery assembly 105 and the preheating branch 110 can form the battery preheating circuit 13, so as to ensure the uniform temperature among the plurality of cells of the battery assembly 105, prolong the service life thereof, improve the battery capacity and output power thereof, and reduce the risk of battery faults.

In some embodiments, the preheating control valve 109 includes a three-way valve. In some embodiments, the preheating switch valve 114 includes a one-way valve. Through the cooperation of the three-way valve and the one-way valve, the plurality of cells of the battery assembly 105 and the preheating branch 110 can form the battery preheating circuit 13, which has a simple structure and is convenient to operate.

In the embodiments shown in FIGS. 1 and 2, the heating assembly 106 is disposed in the second heat exchange circuit 12, and the heating assembly 106 is configured to heat the second heat exchange medium in the second heat exchange circuit 12. By providing the heating assembly 106, the temperature of the second heat exchange medium in the second heat exchange circuit 12 can be higher, which, on the one hand, plays a role of heating the heater core 107, and can increase the temperature of the passenger compartment 2, and on the other hand, plays a role of heating the battery assembly 105.

In the embodiments shown in FIGS. 1 and 2, the chiller 103 is in communication with the motor assembly 108 to form a third heat exchange circuit 14. The third heat exchange circuit 14 is filled with a third heat exchange medium, and the third heat exchange medium is a coolant. The chiller 103 is configured to perform heat exchange on the first heat exchange medium and the third heat exchange medium, so that the third heat exchange medium cools the motor assembly 108. In this embodiment, the chiller 103 may be a water-cooled chiller.

The compressor 101 outputs high-temperature and high-pressure gas after compressing the first heat exchange medium (refrigerant), the high-temperature and high-pressure gas passes through the condenser 102 and undergoes condensation and heat dissipation in the condenser 102, and a high-temperature and high-pressure refrigerant liquid is output. Then, after the liquid passes through the chiller 103,which can function as an evaporator to absorb heat and reduce temperature, a low-temperature and low-pressure liquid is output. During the operation of the vehicle, the motor assembly 108 remains in a working state, and the motor assembly 108 generates a large amount of heat. The first heat exchange medium (low-temperature and low-pressure refrigerant liquid) output by the chiller 103 exchanges heat with the third heat exchange medium (coolant), and the reduction of the temperature of the third heat exchange medium (coolant) can cool the motor assembly 108, thereby realizing the motor cooling function, prolonging the service life of the motor assembly 108, and reducing the fault risk of the motor assembly 108.

In this way, by providing the first heat exchange circuit 11, the second heat exchange circuit 12, and the third heat exchange circuit 14, not only can the heater core 107 of the passenger compartment 2 be heated, the battery assembly 105 be preheated, the heating for the battery assembly 105 be maintained when the temperature difference between the plurality of cells of the battery assembly 105 does not exceed the temperature difference threshold, but also the motor assembly 108 can be cooled, thereby prolonging the service life of the entire vehicle, improving the performance and endurance mileage of the vehicle, reducing the risk of vehicle faults, and reducing the maintenance cost.

In the embodiments shown in FIGS. 1 and 2, the thermal management system 1 further includes a first power assembly 115, and the first power assembly 115 is disposed in the second heat exchange circuit 12 and located upstream of the condenser 102. In these embodiments, the first power assembly 115 may be a heater water pump. The first power assembly 115 may provide a driving force for the second heat exchange medium, which enables the second heat exchange medium (coolant) to circulate in the second heat exchange circuit 12, and ensures the temperature uniformity of the second heat exchange medium (coolant) in the second heat exchange circuit 12.

In the embodiments shown in FIGS. 1 and 2, the thermal management system 1 further includes a second power assembly 116, and the second power assembly 116 is disposed in the second heat exchange circuit 12 and located upstream of the battery assembly 105. In these embodiments, the second power assembly 116 may be a battery water pump. The second power assembly 116 can provide a driving force for the second heat exchange medium, which, on the one hand, enables the second heat exchange medium (coolant) to circulate in the second heat exchange circuit 12 and ensures the temperature uniformity of the second heat exchange medium (coolant) in the second heat exchange circuit 12, and on the other hand, ensures the temperature uniformity of the second heat exchange medium (coolant) in the battery preheating circuit 13, thereby achieving the temperature uniformity among the plurality of cells of the battery assembly *105.*

In the embodiments shown in FIGS. 1 and 2, the thermal management system 1 further includes a third power assembly 117. The third power assembly 117 is disposed in the third heat exchange circuit 14. In these embodiments, the third power assembly 117 may be a motor water pump. The third power assembly 117 may provide a driving force for the third heat exchange medium, which enables the third heat exchange medium (coolant) to circulate in the third heat exchange circuit 14, and ensures the temperature uniformity of the third heat exchange medium (coolant) in the third heat exchange circuit 14.

In the embodiment shown in FIG. 1, when the temperature difference between the plurality of cells of the battery assembly 105 does not exceed the temperature difference threshold, the preheating branch 110 is closed, and the controller 123 controls the first control terminal 1091, the second control terminal 1092, and the third control terminal 1093 of the preheating control valve 109 to be opened. In this case, the battery assembly 105 is communicated with the condenser 102, and is heated by using the second heat exchange medium (the coolant) in the second heat exchange circuit 12. The heater core 107 is also communicated with the condenser 102 and is heated by the second heat exchange medium (coolant) in the second heat exchange circuit 12.

In the embodiment shown in FIG. 2, when the temperature difference between the plurality of cells of the battery assembly 105 exceeds the temperature difference threshold, the controller 123 controls the preheating switch valve 114 to be opened, and controls the third control terminal 1093 of the preheating control valve 109 to be closed. In this case, the battery assembly 105 is communicated with the preheating branch 110, and forms the battery preheating circuit 13 with the preheating branch 110. The plurality of cells of the battery assembly 105 are preheated through the battery preheating circuit 13, so as to realize the battery preheating function. Meanwhile, the heater core 107 is communicated with the condenser 102 and is heated by the second heat exchange medium (coolant) in the second heat exchange circuit 12.

In the embodiments shown in FIGS. 1 to 3, after the thermal management system 1 is started, the first control terminal 1091, the second control terminal 1092, and the third control terminal 1093 of the preheating control valve 109 are controlled to be opened, and the preheating switch valve 114 is controlled to be closed. In this case, the battery assembly 105 starts to be heated through the second heat exchange circuit 12. After heating for a preset period, when it is detected that the temperature difference between the plurality of cells of the battery assembly 105 exceeds the temperature difference threshold, the preheating switch valve 114 is controlled to be opened, and the third control terminal 1093 of the preheating control valve 109 is controlled to be closed. In this case, the battery assembly 105 is communicated with the preheating branch 110, and forms the battery preheating circuit 13 with the preheating branch 110. The plurality of cells of the battery assembly 105 are preheated by the battery preheating circuit 13. Meanwhile, the heater core 107 is communicated with the condenser 102 and is heated by the second heat exchange medium (coolant) in the second heat exchange circuit 12.

After the battery assembly 105 has been preheated for a period of time, when the temperature difference between the plurality of cells of the battery assembly 105 becomes uniform and does not exceed the temperature difference threshold, the controller 123 controls the preheating switch valve 114 to be closed, and controls the third control terminal 1093 of the preheating control valve 109 to be opened. In this case, the battery assembly 105 is communicated with the condenser 102 again, and is heated by the second heat exchange medium (coolant) in the second heat exchange circuit 12. Meanwhile, the heater core 107 is also communicated with the condenser 102, and is heated by the second heat exchange medium (coolant) in the second heat exchange circuit 12. In this way, it can be ensured that the temperatures of the plurality of cells of the battery assembly 105 are uniform, the service life of the battery assembly 105 is prolonged, the battery capacity and output power of the battery assembly 105 are improved, the battery fault risk is reduced, the service life of the entire vehicle is prolonged, the performance and endurance mileage of the entire vehicle are improved, the fault risk of the entire vehicle is reduced, and the maintenance cost is reduced.

In the embodiments shown in FIGS. 1 and 2, the compressor 101 includes a compressor inlet 1011 and a compressor outlet 1012. The thermal management system 1 further includes a bypass branch 118, and the bypass branch 118 is connected between the inlet and the outlet of the compressor 101. The bypass branch 118 is connected between the compressor inlet 1011 and the compressor outlet 1012.

When the ambient temperature is lower than the low-temperature threshold, the bypass branch 118 connects the compressor inlet 1011 and the compressor outlet 1012 to start the compressor 101. When the external temperature is relatively low, the refrigerant is usually in a liquid state or a supercooled state, and both the fluidity and the vaporization capability of the refrigerant deteriorate, thereby reducing the starting efficiency of the compressor 101. Therefore, by providing the bypass branch 118 between the inlet and the outlet of the compressor 101, the high-temperature and high-pressure gas at the compressor outlet 1012 is diverted to the compressor inlet 1011 through the bypass branch 118, which enables the compressor 101 to start effectively in a low-temperature environment, thereby quickly increasing the rotational speed of the compressor 101 at extremely low temperatures and providing more heat for the thermal management system 1. By providing the bypass branch 118, it can be ensured that the compressor 101 can be started at an extremely low temperature of -35°C, and the performance of the compressor 101 can reach 8KW-10KW. In this embodiment, a receiver-drier may be further added after the condenser 102, to enable the thermal management system 1 to control a superheat degree of the bypass branch 118, thereby effectively reducing a liquid slugging risk of the compressor 101.

In the embodiments shown in FIGS. 1 to 3, the bypass branch 118 includes a bypass pipeline 119 and a bypass switch valve 120 provided in the bypass pipeline 119. The bypass pipeline 119 is connected between the compressor inlet 1011 and the compressor outlet 1012. The bypass switch valve 120 is configured to control the on-off state of the bypass pipeline 119, thereby controlling the on-off state between the compressor inlet 1011 and the compressor outlet 1012.

In this embodiment, the bypass switch valve 120 includes an electronic switch valve. The controller 123 includes a first control port 1231, the first control port 1231 is connected to the bypass switch valve 120, and on-off state of the bypass switch valve 120 is controlled through the first control port 1231. When the external temperature is lower than the low-temperature threshold, the controller 123 controls the bypass switch valve 120 to be opened through the first control port 1231, so that the bypass pipeline 119 is communicated with the compressor inlet 1011 and the compressor outlet 1012, and the high-temperature and high-pressure gas at the compressor outlet 1012 is diverted to the compressor inlet 1011 through the bypass branch 118. In this way, the compressor 101 is effectively assisted in starting in a low-temperature environment, thereby quickly increasing the rotational speed of the compressor 101 at extremely low temperatures and providing more heat for the thermal management system 1.

In the embodiments shown in FIGS. 1 to 3, the thermal management system 1 further includes an external temperature sensor 124 (as shown in FIG. 3) disposed outside the vehicle. The external temperature sensor 124 is configured to detect an external temperature and output an external temperature electrical signal. The controller 123 includes a first detection port 1232, and the first detection port 1232 is connected to the external temperature sensor 124. The controller 123 detects the external temperature electrical signal through the first detection port 1232, and controls the on-off state of the bypass switch valve 120 according to the external temperature electrical signal. In this way, whether to control the bypass switch valve 120 to be opened can be determined according to the external temperature, and the control manner is simple.

In some embodiments, when the controller 123 detects, through the first detection port 1232, that the external temperature electrical signal indicates that the external temperature is lower than the low-temperature threshold, the bypass switch valve 120 is controlled to be opened through the first control port 1231, so that the bypass pipeline 119 connects the compressor inlet 1011 and the compressor outlet 1012. In this embodiment, the low-temperature threshold may be -10°, -15°, -20°, -25°, -30°, or -35°, which is not limited in this application.

For example, when the external temperature detected by the controller 123 is lower than -10°, it indicates that the compressor 101 may be slowly started or cannot be started. Hence, the controller 123 controls the bypass switch valve 120 to be opened, so that the bypass pipeline 119 connects the compressor inlet 1011 and the compressor outlet 1012.

In some embodiments, when the controller 123 detects, by the first detection port 1232, that the external temperature electrical signal indicates that the external temperature is higher than the low-temperature threshold, it indicates that the compressor 101 can be normally started, and therefore, the controller 123 may control, by the first control port 1231, the bypass switch valve 120 to be closed, to disconnect the bypass pipeline 119. In this way, when it is determined that the compressor 101 may start slowly or cannot start according to the external temperature, controlling the on-off state of the bypass switch valve 120 can effectively help the compressor 101 start quickly in a low-temperature environment below - 10°, thereby ensuring the good and normal working state of the compressor 101 and improving the starting efficiency and service life of the compressor 101.

In the embodiments shown in FIGS. 1 to 3, the thermal management system 1 further includes an inlet pressure sensor 121 and an outlet pressure sensor 122. The inlet pressure sensor 121 is disposed at the compressor inlet 1011 and is configured to detect a gas pressure at the compressor inlet 1011 and output an inlet pressure electrical signal. The outlet pressure sensor 122 is disposed at the compressor outlet 1012, and is configured to detect a gas pressure at the compressor outlet 1012 and output an electrical outlet pressure signal.

The controller 123 further includes a second detection port 1233, and the second detection port 1233 is connected to the inlet pressure sensor 121 and the outlet pressure sensor 122. The controller 123 detects an inlet pressure electrical signal and an outlet pressure electrical signal through the second detection port 1233, and controls the opening degree of the bypass switch valve 120 according to the inlet pressure electrical signal and the outlet pressure electrical signal, so as to control the flow rate of the high-temperature and high-pressure gas in the bypass pipeline 119. In this embodiment, the opening degree of the bypass switch valve 120 may be controlled according to the pressure difference between the compressor inlet 1011 and the compressor outlet 1012, and the flow rate of the high-temperature and high-pressure gas in the bypass pipeline 119 may be controlled, thereby controlling the gas temperature at the compressor outlet 1012.

In some embodiments, the controller 123 is configured to determine a pressure difference between the compressor inlet 1011 and the compressor outlet 1012 according to the inlet pressure electrical signal and the outlet pressure electrical signal, and when the pressure difference between the compressor inlet 1011 and the compressor outlet 1012 is large, the opening degree of the bypass switch valve 120 may be controlled to increase by the controller 123. In some embodiments, when the pressure difference between the compressor inlet 1011 and the compressor outlet 1012 is small, the controller 123 may control the bypass switch valve 120 to reduce the opening degree thereof while maintaining the initial opening degree. By accurately controlling the opening degree of the bypass switch valve 120 in this way, the flow rate of the high-temperature and high-pressure gas in the bypass pipeline 119 can be controlled, thereby controlling the gas temperature at the compressor outlet 1012, which is beneficial to the rapid startup of the compressor 101.

In this embodiment, when the bypass branch 118 is opened, the chiller 103 can be configured to absorb heat from the environment or utilize waste heat from electric appliances, thereby improving the heating efficiency when the bypass branch 118 is opened. Therefore, when the bypass branch 118 is controlled to be opened, COP (Coefficient of Performance) is greater than 1, the COP represents the ratio of the heat output by the compressor 101 to the input electric energy, and the higher the COP, the higher the efficiency of the compressor 101. If the compressor 101 can provide more heat, that is, can provide more heat to the first heat exchange medium (the refrigerant), the temperature of the second heat exchange medium (the coolant) that exchanges heat in the condenser 102 can be increased, and it can be ensured that the second heat exchange medium (the coolant) of the second heat exchange circuit 12 maintains a higher temperature, making it possible to eliminate or omit the heating assembly 106 to reduce costs.

A person skilled in the art will be able to easily conceive of other embodiments of the present disclosure after considering the specification and practice of the present disclosure disclosed herein. The present disclosure is intended to cover any variations, uses or adaptive changes of the present disclosure that follow the general principles of the present disclosure and include common knowledge or customary technical means in the art not disclosed herein. The specification and embodiments are to be regarded as illustrative only, and the actual scope and spirit of the present disclosure are indicated by the appended claims.

It should be understood that the present disclosure is not limited to the specific structures already described above and illustrated in the accompanying drawings, and that various modifications and changes may be made without departing from the scope thereof. The scope of the present disclosure is limited only by the appended claims.

## Claims

1. A thermal management system (1), comprising a compressor (101), a condenser (102), a chiller (103), and a battery assembly (105), wherein the compressor (101), the condenser (102), and the chiller (103) are in communication with each other sequentially to form a first heat exchange circuit (11), and the first heat exchange circuit (11) is filled with a first heat exchange medium; the condenser (102) is in communication with the battery assembly (105) to form a second heat exchange circuit (12), and the second heat exchange circuit (12) is filled with a second heat exchange medium; and the condenser (102) is configured to perform heat exchange on the first heat exchange medium and the second heat exchange medium, allowing the second heat exchange medium to heat the battery assembly (105);
wherein the first heat exchange medium is a refrigerant, the second heat exchange medium is a coolant, and the thermal management system further comprises:
a preheating control valve (109) disposed in the second heat exchange circuit (12); and
a preheating branch (110), selectively connected to the battery assembly (105) based on the preheating control valve (109),
wherein in a case that a temperature difference among a plurality of cells comprised in the battery assembly exceeds a temperature difference threshold, the battery assembly (105) is disconnected from the second heat exchange circuit (12) and is communicated with the preheating branch (110) through the preheating control valve (109), to form a battery preheating circuit (13) for preheating the plurality of cells.

2. The thermal management system (1) according to claim 1, further comprising a heater core (107) and a controller (123),
wherein:
the heater core (107) is disposed in a passenger compartment of a vehicle;
the controller (123) is connected to the preheating control valve (109);
the preheating control valve (109) comprises a first control terminal (1091) connected to the condenser (102), a second control terminal (1092) connected to the heater core (107), and a third control terminal (1093) connected to the battery assembly (105); and
in the case that the temperature difference among the plurality of cells exceeds the temperature difference threshold, the controller (123) is configured to control the third control terminal (1093) to be closed, and control the preheating branch (110) to be communicated with the plurality of cells, to form the battery preheating circuit (13).

3. The thermal management system (1) according to claim 2, wherein the preheating branch (110) comprises a preheating pipeline (113) and a preheating switch valve (114) disposed in the preheating pipeline (113), and the preheating switch valve (114) is connected to the controller (123); and
in the case that the temperature difference among the plurality of cells exceeds the temperature difference threshold, the controller (123) is configured to control the third control terminal (1093) of the preheating control valve (109) to be closed, and control the preheating switch valve (114) of the preheating branch (110) to be opened, allowing the plurality of cells to be communicated with the preheating branch (110) to form the battery preheating circuit (13).

4. The thermal management system (1) according to claim 3, wherein the preheating control valve (109) comprises a three-way valve; and/or
the preheating switch valve (114) comprises a one-way valve.

5. The thermal management system (1) according to any one of claims 1 to 4, further comprising:
a first battery temperature sensor (111);
a second battery temperature sensor (112); and
a controller (123) connected to the first battery temperature sensor (111) and the second battery temperature sensor (112), the first battery temperature sensor (111) and the second battery temperature sensor (112) being located upstream and downstream of the battery assembly (105), respectively;
wherein:
the first battery temperature sensor (111) is configured to detect a temperature of the second heat exchange medium entering the battery assembly (105) and output a first battery signal;
the second battery temperature sensor (112) is configured to detect a temperature of the second heat exchange medium flowing out of the battery assembly (105) and output a second battery signal; and
the controller (123) is configured to determine the temperature difference among the plurality of cells based on the first battery signal and the second battery signal, and in the case that the temperature difference among the plurality of cells exceeds the temperature difference threshold, the controller (123) is configured to control the third control terminal (1093) of the preheating control valve (109) to be closed, and control the preheating branch (110) to be communicated with the plurality of cells to form the battery preheating circuit (13).

6. The thermal management system (1) according to any one of claims 1 to 5, further comprising a heating assembly (106) disposed in the second heat exchange circuit (12), wherein the heating assembly (106) is configured to heat the second heat exchange medium in the second heat exchange circuit (12).

7. The thermal management system (1) according to any one of claims 1 to 6, further comprising a first power assembly (115) disposed in the second heat exchange circuit (12) and located upstream of the condenser (102).

8. The thermal management system (1) according to any one of claims 1 to 7, further comprising a second power assembly (116) disposed in the second heat exchange circuit (12) and located upstream of the battery assembly (105).

9. The thermal management system (1) according to any one of claims 1 to 8, further comprising a motor assembly (108), wherein the chiller (103) is in communication with the motor assembly (108) to form a third heat exchange circuit (14);
the third heat exchange circuit (14) is filled with a third heat exchange medium, and the chiller (103) is configured to perform heat exchange on the first heat exchange medium and the third heat exchange medium, allowing the third heat exchange medium to cool the motor assembly (108), wherein the third heat exchange medium is a coolant; and/or
the thermal management system (1) further comprises a third power assembly (117) disposed in the third heat exchange circuit (14).

10. The thermal management system (1) according to any one of claims 1 to 9, further comprising a bypass branch (118) connected between an inlet and an outlet of the compressor (101).

11. The thermal management system (1) according to claim 10, wherein the bypass branch (118) comprises:
a bypass pipeline (119); and
a bypass switch valve (120) disposed in the bypass pipeline (119),
wherein the bypass pipeline (119) is connected between the inlet and the outlet of the compressor (101), and the bypass switch valve (120) is configured to control an on-off state of the bypass pipeline (119) to control an on-off state between the inlet and the outlet of the compressor (101).

12. The thermal management system (1) according to claim 11, further comprising:
an inlet pressure sensor (121) disposed at a compressor inlet (1011) of the compressor (101), and configured to detect a gas pressure at the compressor inlet (1011) and output an inlet pressure electrical signal; and
an outlet pressure sensor (122) disposed at a compressor outlet (1012) of the compressor (101), and configured to detect a gas pressure at the compressor outlet (1012) and output an outlet pressure electrical signal.

13. The thermal management system (1) according to claim 12, wherein
in a case that a pressure difference between the compressor inlet (1011) and the compressor outlet (1012) is determined to be large based on the inlet pressure electrical signal and the outlet pressure electrical signal, an opening degree of the bypass switch valve (120) is increased; and
in a case that the pressure difference between the compressor inlet (1011) and the compressor outlet (1012) is determined to be small based on the inlet pressure electrical signal and the outlet pressure electrical signal, the opening degree of the bypass switch valve (120) is decreased.

14. The thermal management system (1) according to claim 11, further comprising:
an external temperature sensor (124), configured to detect an external temperature and output an external temperature electrical signal, wherein in a case that the external temperature electrical signal indicates that the external temperature is lower than a low-temperature threshold, the bypass switch valve (120) is opened, allowing the bypass pipeline (119) to communicate the inlet and the outlet of the compressor (101).

15. A vehicle, comprising: the thermal management system (1) according to any one of claims 1 to 14.
